# EUROPEAN PATENT SPECIFICATION

(11) **EP 3 573 868 B1**
(45) Date of publication and mention of the grant of the patent: **24.08.2022**
(21) Application number: 18744706.5
(22) Date of filing: 29.01.2018
(51) Int. Cl.: B60T 8/17, B60T 13/74

(54) **DRAG BRAKING ELECTRONIC SPEED CONTROL FOR A MODEL VEHICLE**
ELEKTRONISCHE DAUERBREMSUNGSDREHZAHLREGELUNG FÜR EIN MODELLFAHRZEUG
COMMANDE DE VITESSE ÉLECTRONIQUE DE FREINAGE PAR TRAÎNÉE POUR UN VÉHICULE MODÈLE

(30) Priority: 27.01.2017 US 201762451644 P
(43) Date of publication of application: 04.12.2019
(73) Proprietor: Traxxas LP, McKinney, TX 75070 (US)
(72) Inventor: POTEET, Kent, Lucas TX 75002 (US); WOOD, Jonathan, Scott, Frisco,TX 75036 (US); ALLMENDINGER, Otto, Karl, Rowlett TX 75088 (US)
(74) Representative: Finnegan Europe LLP
(86) International application number: PCT/US2018/015769
(87) International publication number: WO 2018/140889

(56) References cited:
- KR-A- 20130 063 793
- US-A1- 2007 293 125
- US-A1- 2012 074 770
- US-A1- 2012 074 770
- US-A1- 2012 312 645
- US-A1- 2012 312 645
- US-A1- 2014 136 069
- US-A1- 2015 096 819
- US-A1- 2015 151 725

## Description

### RELATED APPLICATIONS

This application claims the benefit of a related U.S. Provisional Application Serial No. 62/451,644, filed January 27, 2017, entitled "DRAG BRAKING ELECTRONIC SPEED CONTROL FOR A MODEL VEHICLE," to Kent Poteet et al.

### BACKGROUND

### Description of the Related Art

The following descriptions and examples are not admitted to be prior art by virtue of their inclusion in this section.

Crawlers are a type of model vehicle designed to specifically overcome obstacles and harsh terrain. Users may drive these model vehicle crawlers up and down hills, over obstacles and rocks, and around gates. When driving crawlers, precision is often required when navigating over hills and around ledges, specifically when the crawler needs to go at slower speeds. For a traditional crawler model vehicle, the standard drive profile is for the crawler to apply full braking when the throttle is positioned to neutral. This creates a very jerky driving experience if the throttle is not released smoothly. For a traditional non-crawler type of model vehicle, when the throttle is positioned to neutral, the standard drive profile is for the model vehicle to coast requiring the user to manually actuate the brake.

However, it would desirable for a user to be able to tailor the control of the crawler model vehicle to the user's own driving characteristics and preferences, without the electronic speed control (ESC) profile of the model vehicle affecting the driving experience. For users wanting to control the crawler at higher speeds, the jerking from the standard crawler profile can be become more significant resulting in a 'stoppie' situation (rear wheels leave the ground).

If severe enough, the crawler can roll up onto the nose and flip. Under the standard model vehicle profile, a crawler would be difficult to control when attempting to change from a high speed to a slower speed. The crawler would likely roll backwards on hills, off of ledges, and on into gates. As such, neither of the standard crawler driving profile or the standard model vehicle driving profile are optimal for operating a crawler model vehicle with higher speeds.

KR 2013 0063793 A describes a radio controlled ride-on toy which comprises more than two stop switches formed on a body, a sensor part for sensing a distance to obstacles in front of the body, a driving motor part for delivering torque to wheels for moving the body, a radio driving part with a control part for controlling the driving motor part according to the function of the more than two stop switches and the sensor part, and a radio controller part for transmitting radio signals to the radio driving part, wherein the control part prioritizes a stop signal generated by operations on the radio controller part.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

An embodiment of the current invention is a drag braking system for a model vehicle. The drag braking system includes a transmitter comprising a throttle input, and a motor control device. The motor control device includes a user activated operation set selector and a memory storing at least two braking profiles, wherein first or second of the at least two braking profiles is selected via operation of the operation set selector. A braking force is applied by a motor of the model vehicle when the throttle input is in a neutral position according to the first or second of the at least two braking profiles selected.

Another embodiment of the current invention is a drag braking system for a model vehicle including a transmitter comprising a throttle input, a receiver located in the model vehicle and communicatively coupled to the transmitter, and a motor control device. The motor control device includes a user activated operation set selector and a memory storing three braking profiles, wherein a selected braking profile of the three braking profiles is selected via operation of the operation set selector. And an amount of braking force is applied by a motor of the model vehicle according to the selected braking profile when the throttle input is in a neutral position.

Still another embodiment of the current invention is a method for applying a drag braking force for a model vehicle. The method includes activating a user activated operation set selector and selecting a program setup mode or a profile selection mode via the operation set selector. The method further includes setting a neutral position for a throttle input when the program setup mode is selected and selecting a braking profile when the profile selection mode is selected, wherein the braking profile applies a braking force via a model vehicle motor when the throttle input is in the neutral position.

According to aspects of the present invention, there are provided a drag braking system and a method as set forth in the appended claims. Other or alternative features will become apparent from the following description, from the drawings, and from the claims.

### BRIEF DESCRIPTION OF THE DRAWINGS

For a more complete understanding of the present invention and the advantages thereof, reference is now made to the following Detailed Description taken in conjunction with the accompanying drawings, in which:
FIG. 1 illustrates a block diagram of a system for controlling braking in a model vehicle;
FIG. 2 illustrates a block diagram of a motor controller comprising a user interface, wherein the user interface comprises a button and an LED;
FIG. 3 illustrates a block diagram of a motor controller comprising a user interface, wherein the user interface comprises a two position switch;
FIGS. 4A-4C illustrate three timing diagrams that depict braking applied to a motor for multiple profiles;
FIGS. 5A-5B illustrate logic charts for a program setup mode and a profile selection mode utilized in one embodiment of the system; and
FIG. 6 illustrates four timing diagrams that depict the profile selection mode of one embodiment of the system.

### DETAILED DESCRIPTION

In the following specification, numerous specific details are set forth to provide a thorough understanding of embodiments of the present invention. However, those skilled in the art will appreciate that the embodiments may be practiced without such specific details. In other instances, well-known elements have been illustrated in schematic or block diagram form in order not to obscure embodiments of the present invention in unnecessary detail.

Some of the descriptions in the present invention refer to hardware components, but as those skilled in the art will appreciate, these hardware components may be used in conjunction with hardware-implemented software and/or computer software. Additionally, for the most part, specific details, and the like have been omitted inasmuch as such details are not considered necessary to obtain a complete understanding of the embodiments of the present invention.

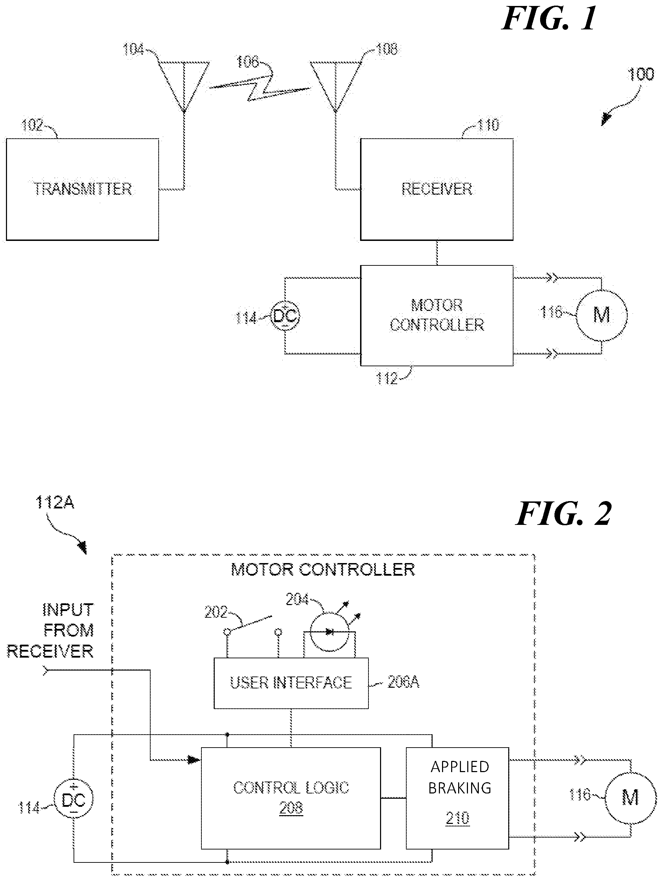

FIG. 1 is a block diagram 100 illustrating an embodiment of an exemplary system for controlling a braking force applied by a motor 116 in a remote controlled model vehicle, as based upon a position of a user operated throttle trigger control. A user of a model vehicle may use a transmitter 102 to provide control input to the model vehicle from a remote location. Accordingly, the user manipulates the transmitter 102 to control speed, and typically direction (i.e., steering, reverse/forward, etc.), of the model vehicle.

The transmitter 102 comprises an antenna 104 for transmitting a user input to a receiver 110 located in the model vehicle. The receiver 110 may also comprise an antenna 108 for receiving the user input from the transmitter 102. In some embodiments, the transmitter 102 transmits a radio frequency signal 106 to the receiver 110.

The receiver 110 may be operatively coupled to a motor controller 112 and may be located on the model vehicle. The motor controller 112 receives the user input from the receiver 110 to determine the intended user command previously input via the position of the throttle trigger control and then direct the motor 116 to apply the throttle or braking accordingly. A battery 114 may supply the motor controller 112 with power. Overall, the battery 114 supplies the motor controller 112 with power, and the motor controller 112 can manage the amount of braking force if any to be applied by the motor 116 in response to the user input as communicated to the receiver 110.

In some embodiments the motor controller 112 may be an electronic speed control device. The electronic speed control device may enable a user to control the automatic braking applied by the motor 116 under certain conditions. The user can establish the amount of braking applied automatically by the motor 116 at any throttle setting (corresponding to throttle position), including when the throttle is positioned at neutral, via the electronic speed control device.

FIG. 2 is a detailed block diagram illustrating an illustrative embodiment of a motor controller 112A comprising a user interface 206A, wherein the user interface 206A comprises a button 202 and an LED 204. As previously described, the motor controller 112A receives user input from the receiver (FIG. 1) to determine whether the throttle trigger is located at a neutral position and the amount of braking to be applied by motor 116. As in the other embodiment, the battery 114 supplies power to the motor controller 112A.

The motor controller 112A may comprise the user interface 206A, a control logic 208, and an applied braking 210. The user interface 206A enables the user to control the operation of the motor controller 112A. An operation set selector, such as switch or a button 202, or even a virtual graphic or electronic switch, may enable the user to enter a desired mode of operation. A feedback signal, such as one or more light-emitting diodes ("LEDs"), sounds, graphical display in an auxiliary user interface, or any other form of feedback, may indicate a selected mode of operation, thereby enabling the user to interact with the motor controller 112A to ensure that the user selects the desired mode of operation. For ease of description, a button 202 and LEDs will be described as a representative operation set selector and a representative feedback signal, respectively.

Accordingly, the user may press and/or release the button 202 in response to the LED or LEDs 204 to select the desired mode of operation via the control logic 208. The control logic 208 manages the applied braking 210, wherein the applied braking 210 determines the specific amount of braking to be applied by the motor 116. Therefore, the control logic 208 manages the braking applied by the motor 116 via the applied braking 210, in response to the desired mode of operation and the user control input obtained from the receiver.

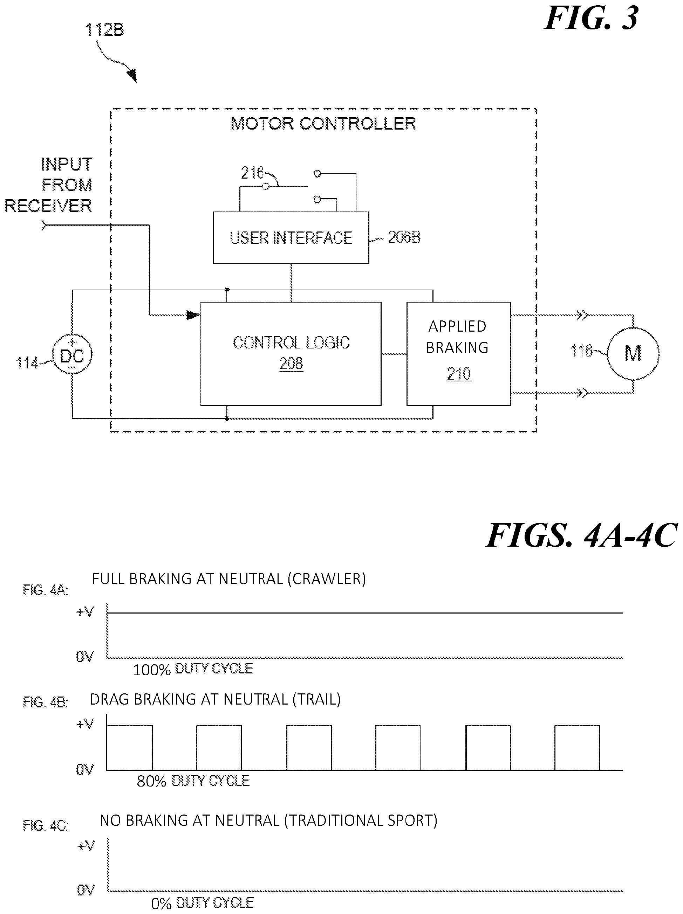

FIG. 3 is a detailed block diagram illustrating an alternative embodiment of a motor controller 112B comprising a user interface 206B, wherein the user interface 206B comprises a two position switch 216. The motor controller 112B of FIG. 3 operates in a similar manner to the previously detailed motor controller 112A of FIG. 2. The user may select the desired mode of operation by actuating the switch 216. Although FIG. 3 illustrates a two position switch 216, in alternative embodiments the switch may comprise three or more positions for more modes of operation.

FIGS. 4A-4C illustrate exemplary three voltage versus timing diagrams that depict applied braking as a pulse width modulated (PWM) signal to a motor for a few illustrative profiles. A person skilled in the art would readily recognize that alternative profiles, such as various percentages of drag braking in a range from 0% to 100%, fall within the teachings of the present invention.

In FIG. 4A-4C, the drag braking applied is shown in response to the throttle trigger being located in a neutral position (i.e., neither accelerating position nor braking position, in some cases, at half the range travel for the throttle input for example) for of the different profiles. FIG. 4A illustrates a 100% braking profile when the throttle trigger is in the neutral position. Accordingly, when a user moves from an accelerating throttle position to the neutral position, the result shown in FIG. 4A is a 100% duty cycle PWM signal supplied to the motor in response to the neutral throttle position.

Alternatively, another embodiment is shown in FIG. 4B. This figure illustrates an 80% braking profile when the throttle trigger is in the neutral position. Instead of applying a full breaking as in the previous profile, an 80% duty cycle PWM signal is supplied to the motor in response to the neutral throttle position. In addition, FIG. 4C illustrates a 0% braking profile when the throttle trigger is in the neutral position.

Whereas the previous two examples demonstrated some degree of braking, from full braking to a partial application of braking, in FIG. 4C a 0% duty cycle PWM signal or no signal is supplied to the motor to brake in response to the throttle position being in a neutral position. A model vehicle responding to the braking profile of FIG. 4C would coast when the throttle was moved to a neutral position. In some embodiments, a braking profile may be represented by the different profiles illustrated in FIGS. 4A-4C.

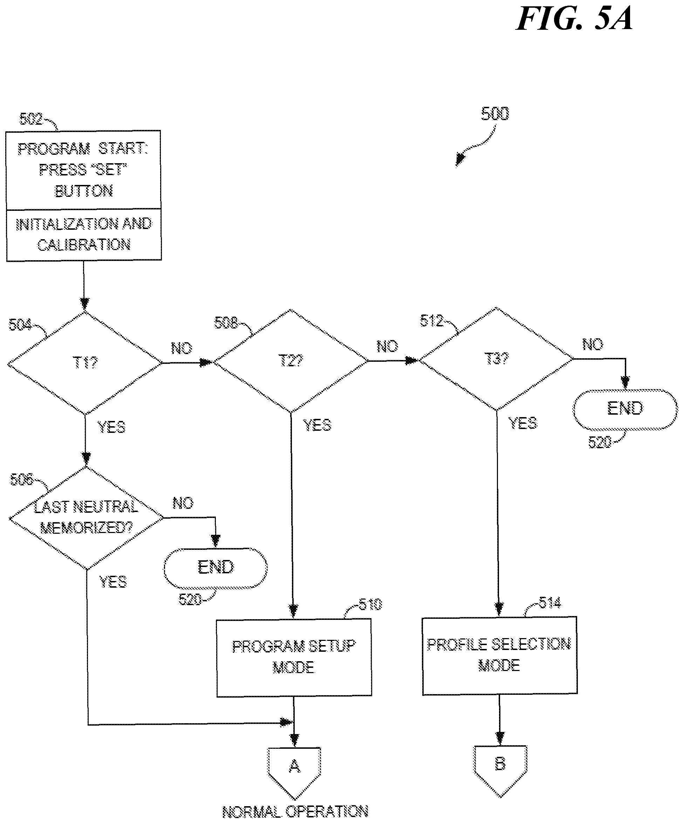

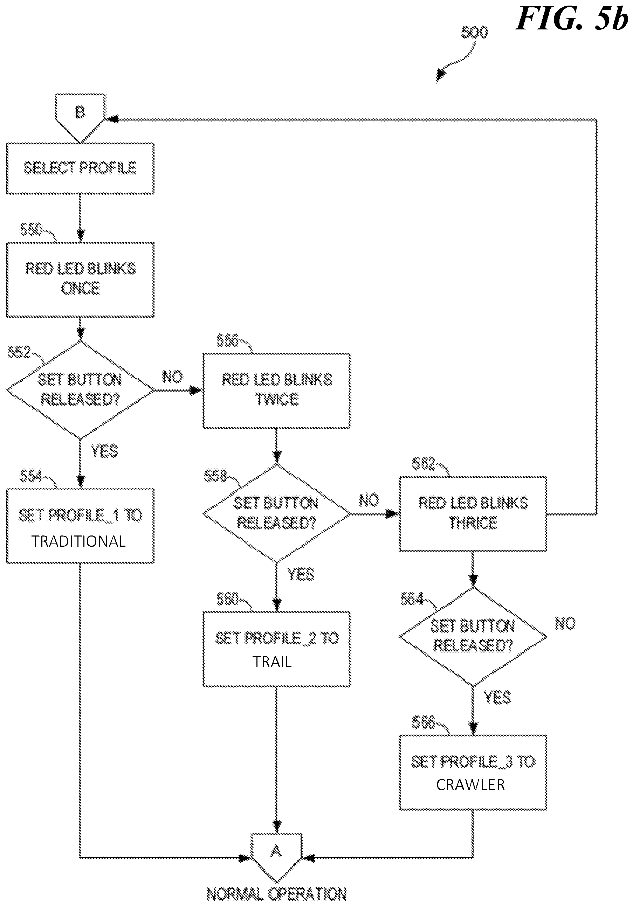

Figs. 5A and 5B illustrate an embodiment of an exemplary logic chart 500 for a program setup mode and a profile selection mode as utilized in a remote controlled model vehicle system. The program setup mode and the profile selection mode may be controlled by the user through the use of the button and a feedback signal such as an LED located on or connected (e.g., either directly or wirelessly) to the model vehicle as shown in FIG. 2. This button may be also be called a "set" button.

In the following description, an embodiment of a model vehicle may comprise a logic system that accomplishes the features shown in the logic chart 500. In some cases, an embodiment of this logic system may be an electronic speed control device. FIGS. 5A and 5B illustrate an example of one embodiment of this invention as claimed. Of course, a person skilled in the art would recognize additional embodiments that could be implemented following the teachings of this example. Accordingly, the use of this example of the claimed invention does not limit the scope of the present invention.

In this exemplary embodiment, the user may power up the transmitter with the throttle at a neutral position in order to start the program. In most applications of transmitters, the default values of the transmitter are for a 50/50 throttle position, by which the neutral position is considered to be halfway between full forward throttle and full reverse throttle. The user may then connect a fully charged battery pack to an electronic speed control device located in the model vehicle. Even though the electronic speed control device is described as being located in the model vehicle, the functionality may be located in the transmitter as well.

Program setup and profile setup can be started by pressing the "set" button 502. In some embodiments, after pressing the "set" button 502, the logic system may determine how long the user activated the "set" button before releasing. The logic system determines if the user activated the "set" button for a specific first time period, as indicated by decision block T1 504. For example, T1 504 could be greater than 1 sec. and less than 5 sec.

If the user did activate the button for this period of time, then the last memorized neutral settings for the throttle on the transmitter may be used 506. After the conclusion of this step the electronic speed control device may be used for normal operation. However, if there were no memorized neutral settings, then the electronic speed control device cannot be used 520.

If the user did not activate the button in a manner that fell within the first time period, the system determines if the user activated the "set" button for a specific second time period, as indicated by function block T2 308. If the user did activate the button for this period of time, such as greater than 5 seconds and less than 10 seconds, then the system may launch into program setup mode 510. In program setup mode 510 the user may initialize the neutral setting for the throttle. After these steps the electronic speed control device may be used for normal operation. Overall, FIG. 5A focuses on the program setup mode.

Even though time periods are shown in the illustrative logic diagram in FIG. 5A, the decision blocks T 1, T2, and T3 can be based upon a variety of alternative methods. In some cases, an embodiment may use something similar to 'mouse clicks' familiar as a computer input device. In such a case, a single click would indicate T1, a double click T2, and a triple click T3. In other embodiments, T1, T2, and T3 may be menu section items in which case the user directly selects the desired operating environment.

Further in the logic system illustratively shown in FIG. 5A, the device determines if the user activated the "set" button for a specific third time period, as indicated by decision block T3 512. This time period in this example is longer than 10 seconds for example. If the user activates the "set" button for T3 512, then the logic system may launch into profile selection mode 514 shown in the function block at the bottom of FIG. 5A.

Profile selection mode is described with reference to the illustrative flowchart shown in FIG. 5B. After the logic system determines that the user selected T3 512 as an operating environment, the logic system goes to profile selection mode 514 and the feedback signal red LED provides an initial indication of this mode, for example, by blinking once 550. The user should still be activating the "set" button in the profile selection mode.

The logic system then determines whether the user released the "set" button during a first predetermined time period during or after the red LED has blinked once, shown by decision block 552. If the user ceases to activate the "set" button during the first predetermined time period then the electronic speed control device selects profile 1 554. If the user did not cease to activate the "set" button during the first predetermined time period then the red LED blinks twice, as shown by function block 556. For example, the red LED may blink twice at approximately 5 seconds after blinking once (550). Accordingly, the time period for the user to continue activating the button after the red LED blinks once 550 may be less than 5 seconds.

The logic system next determines whether the user ceased to activate the "set" button during a second predetermined time period during or after the red LED has blinked twice 558. If the user ceased to activate the "set" button during the second predetermined time period then the electronic speed control device selects profile 2 560. If the user did not release the "set" button during the second predetermined time period then the red LED blinks three times 562. For example, the red LED may blink three times 562 at approximately 10 seconds after blinking once.

The logic system determines whether the user has ceased to activate the "set" button during a third predetermined time period during or after the red LED has blinked three times 564. If the user released the "set" button during the third predetermined time period then the electronic speed control device selects profile 3 566, for example, after 10 seconds but prior to 15 seconds. If the user did not cease to activate the "set" button during the third predetermined time period, such as after 15 seconds, then the profile selection mode restarts and the red LED blinks once 550.

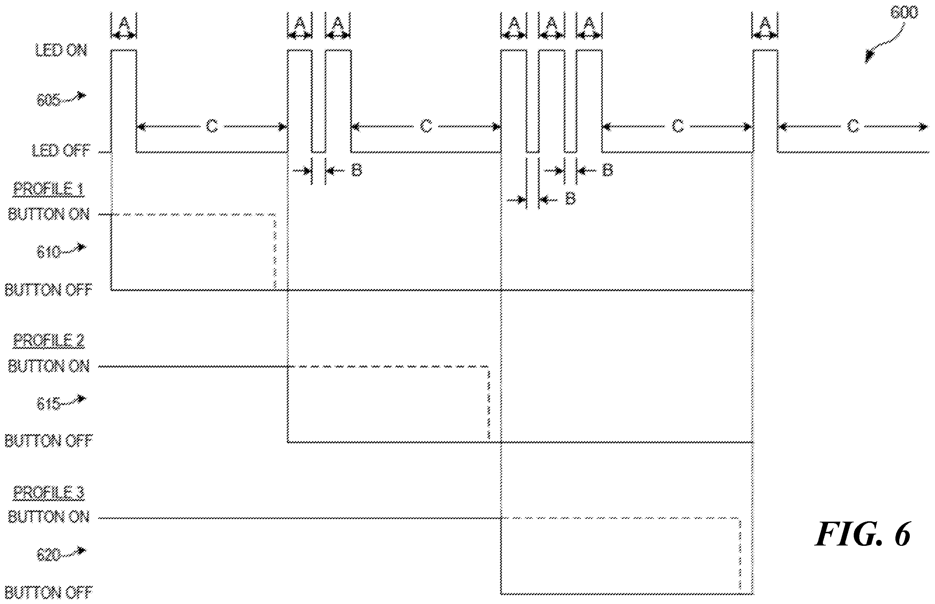

In one embodiment of the present invention the first predetermined time period, the second predetermined time period, and the third predetermined time period may be substantially equal. After a profile has been selected, an LED may blink green to indicate a successful profile selection. Program selection mode is described in further detail with reference to FIG. 6.

There are many alternative embodiments concerning the profiles, wherein profile 1, profile 2, and profile 3 may comprise many variations. In addition, there can also be different numbers of individual profiles. In one embodiment, profile 1 may determine that the motor will be supplied with 100% braking when the throttle trigger is in the neutral position. This represents the standard crawler driving profile where the user does not need to manually actuate the brakes.

Embodiments of profile 2 may determine that the motor will be supplied with 80% braking (or some other percentage) when the throttle trigger is in the neutral position. For profile 2 the model vehicle will apply moderate braking force when the vehicle is in neutral. The effect is that the vehicle may slow notably in neutral, but will not stop abruptly. If desired, the user may also manually apply additional braking to further slow or stop the vehicle. This provides for an overall smoother driving experience when operating the model vehicle at high speeds. This may be a desired profile when a user is driving a crawler model vehicle at a high speed but will still require precise control at slower speeds during a portion of the drive.

Embodiments of profile 3 may determine that the motor will be supplied with 0% braking when the throttle trigger is in the neutral position. Profile 3 is representative of a traditional sport driving profile of model vehicles where the vehicle will coast or free roll until it slows to a stop. In this profile, brakes are applied only manually by the user to slow the vehicle beyond normal drive friction.

In an embodiment of the logic system, profile 3 may be used as the default profile. The user may then follow the steps referenced in FIG. 5B to select an alternate profile to tailor the driving characteristics of the model vehicle to the user's needs or desire.

FIG. 6 shows four timing diagrams 600 that illustrate the profile selection mode of one embodiment of the remote controlled model vehicle system. The first timing diagram 605 may illustrate the behavior of the LEDs during the profile selection mode. Accordingly, the LED may be on or off, wherein the LED is on when a red light may be seen by the user.

The time period illustrated by "A" can indicate the time period that the LED is on. The time period illustrated by "B" can indicate the delay between sequential LED light emissions. As shown in diagram 605, the time period "B" is used when there are two or more sequential LED emissions. The time period illustrated by "C" can indicate the delay between profiles. In one embodiment of the present invention, time period "A" represents 0.25 seconds, time period "B" represents 0.15 seconds, and time period "C" represents 2.0 seconds. These features of FIG. 6 represent only one exemplary embodiment of the present invention, and therefore the present invention is not limited by this specific embodiment.

As previously described, one LED emission can represent profile 1, two sequential LED emissions can represent profile 2, and three sequential LED emissions can represent profile 3. The second timing diagram 610, the third timing diagram 615, and the fourth timing diagram 620 may illustrate the behavior of the user during the profile selection mode. To begin the profile selection mode the user can press and hold a button until the user makes their profile selection by releasing the button. Accordingly, the button can be on, which may indicate that the user is holding the button, or the button can be off, which may indicate that the user has released the button, for this embodiment.

In the first timing diagram 605, the single LED emission can indicate that the profile selection mode is currently indicating profile 1 to the user. As shown in the second timing diagram 610, the user can select profile 1 by releasing the button within the time period during the single LED emission or a predetermined amount of time after the single LED emission. The predetermined amount of time may be close to the time period "C." If the user does not release the button in the time period indicating profile 1, then two sequential LED emissions can indicate that the profile selection mode is currently indicating profile 2 to the user. As shown in the third timing diagram 615, the user can select profile 2 by releasing the button within the time period during the two LED emissions or the predetermined amount of time after the two LED emissions. If the user does not release the button in the time period indicating profile 1 or profile 2, then three sequential LED emissions can indicate that the profile selection mode is currently indicating profile 3 to the user.

As shown in the fourth timing diagram 620, the user can select profile 3 by releasing the button within the time period during the three LED emissions or the predetermined amount of time after the three LED emissions. If the user does not release the button in the time period indicating profile 1, profile 2, or profile 3, then the profile selection mode restarts with a single LED emission that indicates profile 1. Accordingly, the user can select the desired profile by releasing the button at the correct time.

Elements of the embodiments have been introduced with either the articles "a" or "an." The articles are intended to mean that there are one or more of the elements. The terms "including" and "having" are intended to be inclusive such that there may be additional elements other than the elements listed. The term "or" when used with a list of at least two elements is intended to mean any element or combination of elements.

Although only a few example embodiments have been described in detail above, those skilled in the art will readily appreciate that a wide range of variations, modifications, changes, and substitutions are contemplated in the foregoing invention and, in some instances, some features of the present invention may be employed without a corresponding use of the other features.

## Claims

1. A drag braking system (100) for a model vehicle comprising:
a transmitter (102) comprising a throttle input;
a motor control device (112, 112A, 112B) comprising:
a user activated operation set selector (202); and
a memory for storing at least two braking profiles,
**characterised in that**:
a first or second of the at least two braking profiles is selectable via operation of the operation set selector; and
a motor (116) of the model vehicle is configured to apply a braking force when the throttle input is in a neutral position according to the first or second of the at least two braking profiles selected.

2. The drag braking system according to claim 1 wherein the operation set selector comprises a manually operated button.

3. The drag braking system according to claim 1 or 2, wherein:
the memory is configured to store a third braking profile; and
wherein the third braking profile is also selectable via the operation of the operation set selector.

4. The drag braking system according to claim 3 further comprising:
a receiver (110) located in the model vehicle and configured to be communicatively coupled to the transmitter,
wherein the motor of the model vehicle is configured to apply an amount of braking force according to the selected braking profile when the throttle input is in a neutral position.

5. The drag braking system according to claim 3 or 4, wherein:
the first braking profile is for applying 100% braking when the throttle input is in a neutral position;
the second braking profile is for applying a 0% braking when the throttle input is in a neutral position; and
the third braking profile is for applying a range of braking greater than 0% and less than 100% when the throttle input is in a neutral position.

6. The drag braking system according to any preceding claim, wherein the motor control device is an electronic speed control device located in the model vehicle, and the motor control device is configured to be communicatively coupled to the transmitter via a receiver.

7. The drag braking system according to any preceding claim, wherein the operation set selector is further configured to select a program setup mode in which the throttle input initializes a neutral position.

8. The drag braking system according to any preceding claim, wherein the motor control device is located on the transmitter.

9. The drag braking system according to any preceding claim, wherein the motor control device further comprises a feedback signal.

10. The drag braking system according to claim 9, wherein the feedback signal comprises a light emitting diode.

11. The drag braking system according to claim 9 or 10, wherein the feedback signal indicates a profile number of the selected profile.

12. The drag braking system according to any one of claims 9 to 11, wherein the feedback signal indicates a program setup mode or a braking selection mode.

13. A method for applying a drag braking force for a model vehicle, comprising:
activating a user activated operation set selector,
**characterised by**:
selecting a program setup mode or a profile selection mode via the operation set selector;
setting a neutral position for a throttle input when the program setup mode is selected; and
selecting a braking profile when the profile selection mode is selected,
wherein the braking profile applies a braking force via a model vehicle motor when the throttle input is in the neutral position.

14. The method according to claim 13, wherein the braking profile is one of 100% braking force, 0% braking force, or a percentage in a range from 0% to 100% braking force, for the applied braking force.

15. The method according to claim 13 or 14, wherein:
the user activated operation set selector comprises a push button switch; and the activating comprises holding the operation set selector for an amount of time.

## Patentansprüche

1. Dauerbremssystem (100) für ein Modellfahrzeug, umfassend:
einen Sender (102), der einen Drosseleingang umfasst;
eine Motorsteuervorrichtung (112, 112A, 112B), umfassend:
einen benutzeraktivierten Betriebswahlschalter (202); und
einen Speicher zum Speichern von mindestens zwei Bremsprofilen,
**dadurch gekennzeichnet, dass**:
ein erstes oder zweites der mindestens zwei Bremsprofile über die Betätigung des Betriebswahlschalters wählbar ist; und
ein Motor (116) des Modellfahrzeugs dazu konfiguriert ist, wenn sich der Drosseleingang in einer neutralen Position befindet, eine Bremskraft gemäß dem ersten oder zweiten der mindestens zwei ausgewählten Bremsprofile aufzubringen.

2. Dauerbremssystem nach Anspruch 1, wobei der Betriebswahlschalter einen manuell betätigten Knopf umfasst.

3. Dauerbremssystem nach Anspruch 1 oder 2, wobei:
der Speicher dazu konfiguriert ist, ein drittes Bremsprofil zu speichern;
und wobei das dritte Bremsprofil auch über die Betätigung des Betriebswahlschalters wählbar ist.

4. Dauerbremssystem nach Anspruch 3, ferner umfassend:
einen Empfänger (110), der sich in dem Modellfahrzeug befindet und dazu konfiguriert ist, kommunikativ mit dem Sender gekoppelt zu sein,
wobei der Motor des Modellfahrzeugs dazu konfiguriert ist, eine Größe der Bremskraft gemäß dem ausgewählten Bremsprofil aufzubringen, wenn sich der Drosseleingang in einer neutralen Position befindet.

5. Dauerbremssystem nach Anspruch 3 oder 4, wobei:
das erste Bremsprofil zum Aufbringen einer 100%-Bremsung dient, wenn sich der Drosseleingang in einer neutralen Position befindet;
das zweite Bremsprofil zum Aufbringen einer 0%-Bremsung dient, wenn sich der Drosseleingang in einer neutralen Position befindet; und
das dritte Bremsprofil zum Aufbringen einer Bremsung im Bereich von mehr als 0 % und weniger als 100 % dient, wenn sich der Drosseleingang in einer neutralen Position befindet.

6. Dauerbremssystem nach einem vorhergehenden Anspruch, wobei die Motorsteuervorrichtung eine elektronische Geschwindigkeitssteuervorrichtung ist, die sich in dem Modellfahrzeug befindet, und die Motorsteuervorrichtung dazu konfiguriert ist, über einen Empfänger kommunikativ mit dem Sender gekoppelt zu sein.

7. Dauerbremssystem nach einem vorhergehenden Anspruch, wobei der Betriebswahlschalter ferner dazu konfiguriert ist, einen Programmeinrichtungsmodus auszuwählen, in dem der Drosseleingang eine neutrale Position initialisiert.

8. Dauerbremssystem nach einem vorhergehenden Anspruch, wobei sich die Motorsteuervorrichtung auf dem Sender befindet.

9. Dauerbremssystem nach einem vorhergehenden Anspruch, wobei die Motorsteuervorrichtung ferner ein Rückkopplungssignal umfasst.

10. Dauerbremssystem nach Anspruch 9, wobei das Rückkopplungssignal eine lichtemittierende Diode umfasst.

11. Dauerbremssystem nach Anspruch 9 oder 10, wobei das Rückkopplungssignal eine Profilnummer des ausgewählten Profils angibt.

12. Dauerbremssystem nach einem der Ansprüche 9 bis 11, wobei das Rückkopplungssignal einen Programmeinrichtungsmodus oder einen Bremsauswahlmodus angibt.

13. Verfahren zum Aufbringen einer Dauerbremskraft für ein Modellfahrzeug, umfassend:
Aktivieren eines benutzeraktivierten Betriebswahlschalters,
**gekennzeichnet durch**:
Auswählen eines Programmeinrichtungsmodus oder eines Profilauswahlmodus über den Betriebswahlschalter;
Einstellen einer neutralen Position für einen Drosseleingang, wenn der Programmeinrichtungsmodus ausgewählt ist; und
Auswählen eines Bremsprofils, wenn der Profilauswahlmodus ausgewählt ist,
wobei das Bremsprofil eine Bremskraft über einen Modellfahrzeugmotor aufbringt, wenn sich der Drosseleingang in der neutralen Position befindet.

14. Verfahren nach Anspruch 13, wobei das Bremsprofil eines von 100 % Bremskraft, 0 % Bremskraft oder ein Prozentsatz in einem Bereich von 0 % bis 100 % Bremskraft für die aufgebrachte Bremskraft ist.

15. Verfahren nach Anspruch 13 oder 14, wobei
der benutzeraktivierte Betriebswahlschalter einen Druckknopfschalter umfasst; und das Aktivieren das Halten des Betriebswahlschalters für eine Zeitdauer umfasst.

## Revendications

1. Système de freinage par traînée (100) pour un véhicule modèle comprenant :
un émetteur (102) comprenant une entrée de papillon des gaz ; un dispositif de commande de moteur (112, 112A, 112B) comprenant: un sélecteur d'ensemble d'opérations activé par l'utilisateur (202) ; et une mémoire destinée à stocker au moins deux profils de freinage, **caractérisé en ce que** :
un premier ou un deuxième des au moins deux profils de freinage peut être sélectionné par l'intermédiaire de l'actionnement du sélecteur d'ensemble d'opérations ; et
un moteur (116) du véhicule modèle étant configuré pour appliquer une force de freinage lorsque l'entrée de papillon des gaz est dans une position neutre selon le premier ou le deuxième des au moins deux profils de freinage sélectionné.

2. Système de freinage par traînée selon la revendication 1, ledit sélecteur d'ensemble d'opérations comprenant un bouton actionné manuellement.

3. Système de freinage par traînée selon la revendication 1 ou 2,
ladite mémoire étant configurée pour stocker un troisième profil de freinage ; et ledit troisième profil de freinage pouvant également être sélectionné par l'intermédiaire du fonctionnement du sélecteur d'ensemble d'opérations.

4. Système de freinage par traînée selon la revendication 3 comprenant en outre :
un récepteur (110) situé dans le véhicule modèle et configuré pour être couplé en communication à l'émetteur, ledit moteur du véhicule modèle étant configuré pour appliquer une quantité de force de freinage selon le profil de freinage sélectionné lorsque l'entrée de papillon des gaz est dans la position neutre.

5. Système de freinage par traînée selon la revendication 3 ou 4,
ledit premier profil de freinage étant destiné à appliquer un freinage à 100 % lorsque l'entrée de papillon des gaz est dans la position neutre ;
ledit deuxième profil de freinage étant destiné à appliquer un freinage à 0 % lorsque l'entrée de papillon des gaz est dans la position neutre ; et
ledit troisième profil de freinage étant destiné à appliquer une plage de freinage supérieure à 0 % et inférieure à 100 % lorsque l'entrée de papillon des gaz est dans la position neutre.

6. Système de freinage par traînée selon une quelconque revendication précédente, ledit dispositif de commande de moteur étant un dispositif de commande de vitesse électronique situé dans le véhicule modèle, et ledit dispositif de commande de moteur étant configuré pour être couplé en communication à l'émetteur par l'intermédiaire d'un récepteur.

7. Système de freinage par traînée selon une quelconque revendication précédente, ledit sélecteur d'ensemble d'opérations étant en outre configuré pour sélectionner un mode de configuration de programme dans lequel l'entrée de papillon des gaz initialise une position neutre.

8. Système de freinage par traînée selon une quelconque revendication précédente, ledit dispositif de commande de moteur étant situé sur l'émetteur.

9. Système de freinage par traînée selon une quelconque revendication précédente, ledit dispositif de commande de moteur comprenant en outre un signal de rétroaction.

10. Système de freinage par traînée selon la revendication 9, ledit signal de rétroaction comprenant une diode électroluminescente.

11. Système de freinage par traînée selon la revendication 9 ou 10, ledit signal de rétroaction indiquant un numéro de profil du profil sélectionné.

12. Système de freinage par traînée selon l'une quelconque des revendications 9 à 11, ledit signal de rétroaction indiquant un mode de configuration de programme ou un mode de sélection de freinage.

13. Procédé permettant d'appliquer une force de freinage par traînée pour un véhicule modèle, comprenant :
l'activation d'un sélecteur d'ensemble d'opérations activé par l'utilisateur, **caractérisé par** :
la sélection d'un mode de configuration de programme ou d'un mode de sélection de profil par l'intermédiaire du sélecteur d'ensemble d'opérations ;
le réglage d'une position neutre pour une entrée de papillon des gaz lorsque le mode de configuration de programme est sélectionné ; et
la sélection d'un profil de freinage lorsque le mode de sélection de profil est sélectionné, ledit profil de freinage appliquant une force de freinage par l'intermédiaire d'un moteur de véhicule modèle lorsque l'entrée de papillon des gaz est dans la position neutre.

14. Procédé selon la revendication 13, ledit profil de freinage étant l'un de 100 % de force de freinage, 0 % de force de freinage ou un pourcentage dans une plage allant de 0 % à 100 % de force de freinage, pour la force de freinage appliquée.

15. Procédé selon la revendication 13 ou 14,
ledit sélecteur d'ensemble d'opérations activé par l'utilisateur comprenant un commutateur à bouton-poussoir ; et
ladite activation comprenant le maintien du sélecteur d'ensemble d'opérations pendant une quantité de temps.
